# FASCICULE DE BREVET EUROPEEN

(11) **EP 1 522 756 B1**
(45) Date de publication et mention de la délivrance du brevet: **10.02.2010**
(21) Numéro de dépôt: 04023752.1
(22) Date de dépôt: 06.10.2004
(51) Int. Cl.: F16D 65/14

(54) **Dispositif de freinage de vehicule automobile comportant des moyens elastiques de stockage d energie de serrage**
Bremsvorrichtung für Kraftfahrzeuge mit elastischen Mitteln zur Speicherung von Zuspannenergie
Brake device for vehicles with elastic mean for storing clamping energy

(30) Priorité: 08.10.2003 FR 0311790
(43) Date de publication de la demande: 13.04.2005
(73) Titulaire: ROBERT BOSCH GMBH, 70442 Stuttgart (DE)
(72) Inventeur: Boisseau, Jean-Pierre, 75014 Paris (DE); Hurwic, Aleksander, 75020 Paris (FR)
(74) Mandataire: Hurwic, Aleksander Wiktor

(56) Documents cités:
- DE-A- 19 835 550
- DE-A- 19 853 721
- US-A- 3 866 721
- US-A- 5 697 475

## Description

L'invention concerne un dispositif de freinage pour un véhicule automobile.

L'invention concerne plus particulièrement un dispositif de freinage pour un véhicule automobile, du type qui comporte un organe mobile lié à une roue du véhicule, et un organe statique du véhicule qui est commandé entre une position desserrée dans laquelle il n'est pas en contact avec l'organe mobile et une position de serrage dans laquelle il est serré de façon continue contre l'organe mobile afin d'immobiliser le véhicule en stationnement, l'organe statique étant rappelé élastiquement vers sa position desserrée, du type dans lequel les déplacements de l'organe statique sont commandés par un organe de commande qui, dans un état activé, pousse l'organe statique vers sa position de serrage.

On connaît de nombreux dispositifs de freinage de ce type, notamment des freins à disque ou des freins à tambour. Par exemple, dans le cas d'un frein à disque, l'organe statique est constituée d'une garniture de friction qui est portée par un étrier et l'organe mobile est constitué d'un disque qui est lié en rotation à une roue du véhicule.

Un tel dispositif de freinage peut fonctionner alternativement selon une configuration de "frein de service" selon laquelle il est utilisé pour ralentir le mouvement de rotation de la roue associée et éventuellement pour immobiliser cette dernière, ou selon une configuration de "frein de stationnement" il est utilisé pour maintenir la roue immobile.

Lorsque le conducteur du véhicule active l'organe de commande associé, qui est par exemple constitué d'un levier de frein de stationnement, une pression de serrage est appliquée à la garniture de friction qui est serrée de façon continue contre le disque. La pression de serrage appliquée à la garniture de friction est au moins égale à une pression d'adhérence de façon que le véhicule soit immobilisé en stationnement par adhérence de la garniture de friction au disque.

Il arrive que les garnitures de friction soient chaudes lorsque le frein de stationnement est activé. Ce phénomène se produit notamment lorsque lesdites garnitures de friction sont aussi utilisées pour ralentir le véhicule dans le mode frein de service.

Pour cette utilisation en configuration de frein de service, les déplacements de la garniture de friction sont pilotés par une seconde commande hydraulique. Lorsque la configuration de frein de service est établie, la rotation du disque est ralentie par le frottement des garnitures de friction contre le disque. Le frottement provoque alors l'échauffement des garnitures de friction.

Or, les garnitures de friction se dilatent sous l'effet de la chaleur. Lorsque la configuration de stationnement est établie, l'organe de commande applique la pression d'adhérence sur les garnitures de friction alors que celles-ci sont généralement encore chaudes. Lorsque le frein de stationnement reste activé longtemps, ce qui est souvent le cas, les garnitures de friction refroidissent en se rétractant et retrouvent alors leur volume d'origine.

De ce fait, la pression de la garniture de friction contre l'organe mobile est sensiblement diminuée. La pression exercée par la garniture de friction sur le disque est donc susceptible de devenir inférieure à la pression d'adhérence requise pour assurer une parfait immobilisation du véhicule. Ce problème est d'autant plus critique que véhicule est stationné sur une forte pente.

Le desserrage des garnitures de friction peut ainsi avoir pour conséquence le déplacement involontaire du véhicule en stationnement. Ce phénomène est aussi connu sous le nom de « roll-away ».

Il est déjà connu de l'état de la technique de proposer des dispositifs de freinage dont l'organe de commande est activé par la traction d'un câble. Lorsque le câble est suffisamment tendu, il est susceptible d'être déformé élastiquement en traction alors que la gaine entourant le câble est déformée en compression. Ainsi, lors de la rétraction des garnitures de friction, l'énergie de déformation élastique emmagasinée dans le câble est susceptible de compenser la perte de pression de serrage due au refroidissement de la garniture de friction.

Il arrive cependant que le câble ne soit pas suffisamment tendu et que trop peu d'énergie élastique soit emmagasinée pour compenser la perte de pression de serrage de la garniture de friction contre le disque.

De plus, lorsque le frein de stationnement n'est pas actionné par l'intermédiaire d'un câble mais, par exemple, par une commande électrique, il ne subsiste plus d'élément susceptible de stocker de l'énergie de serrage autre que l'étrier de frein.

Afin de résoudre ce problème, US-A-3 866 721 propose un dispositif de freinage du type décrit précédemment, qui comporte des moyens élastiques de stockage d'énergie de serrage qui sont interposés entre l'organe de commande et l'organe statique de façon à être comprimés élastiquement entre l'organe de commande et l'organe statique lorsque l'organe de commande pousse l'organe statique vers sa position de serrage pour maintenir l'organe statique serré contre l'organe mobile en cas de desserrage des organes statique et mobile provoqué par le refroidissement de ceux-ci.

Selon l'invention les moyens élastiques de stockage d'énergie de serrage sont précontraints.

Selon d'autres caractéristiques de l'invention :
- l'organe mobile est constitué d'un disque solidaire en rotation de la roue associée du véhicule, l'organe statique est constitué d'une garniture de friction qui est montée coulissante selon une direction axiale parallèle à l'axe de la roue entre sa position de repos et sa position de serrage, et l'organe statique comporte un piston coulissant axialement qui est interposé entre l'organe de commande et la garniture de friction,
- les moyens élastiques de stockage d'énergie de serrage sont interposés axialement entre le piston et la garniture de friction,
- les moyens élastiques de stockage d'énergie de serrage sont interposés axialement entre l'organe de commande et le piston,
- le dispositif comporte un frein de service qui est susceptible de commander le déplacement de la garniture de friction vers sa position de serrage indépendamment de l'organe de commande sans provoquer la compression des moyens élastiques de stockage d'énergie de serrage,
- le dispositif comporte un dispositif de rattrapage d'usure de la garniture de friction qui est interposé entre l'organe de commande et la garniture de friction,
- les moyens élastiques de stockage d'énergie de serrage comportent un empilement de rondelles de type Belleville.
- les moyens élastiques de stockage d'énergie de serrage comportent un ressort déformable selon une direction d'orientation axiale,
- les moyens élastiques de stockage d'énergie de serrage comportent un élément qui est constitué d'un matériau élastomère déformable élastiquement.

D'autres caractéristiques et avantages de l'invention apparaîtront au cours de la lecture de la description détaillée qui va suivre pour la compréhension de laquelle on se reportera aux dessins en annexe, parmi lesquels :
- la figure 1 est une vue de côté qui représente un dispositif de freinage du type frein à disque qui comporte un étrier qui est commandé par un organe d'actionnement ;
- la figure 2 est une vue en coupe axiale d'un dispositif réalisé selon les enseignements de l'invention représentant l'organe d'actionnement du dispositif de freinage de la figure 1 dans une position desserrée des garnitures de friction par rapport au disque ; et
- la figure 3 est une vue analogue à celle de la figure 2 qui représente le dispositif de freinage dans une position de serrage des garnitures de friction sur le disque ;
- la figure 4 est une vue en coupe axiale d'une variante d'un dispositif réalisé selon les enseignements de l'invention.

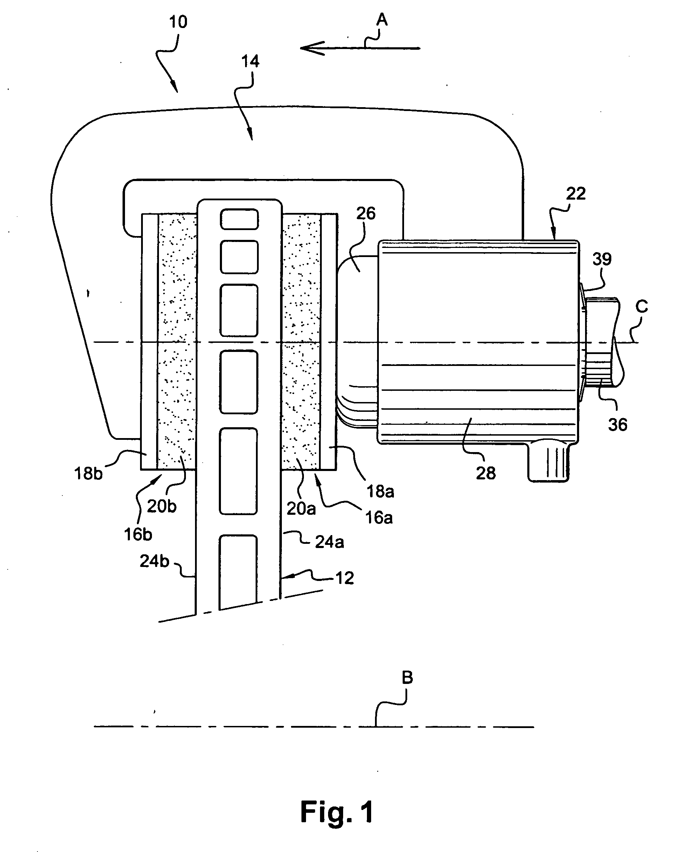

On adoptera à titre non limitatif une orientation axiale indiquée à la figure 1 par la flèche "A" qui est dirigée depuis l'arrière vers l'avant.

On a représenté à la figure 1 un dispositif de freinage 10 de véhicule automobile constitué d'un frein à disque. De manière connue, le dispositif 10 comporte un disque 12 dont l'axe "B" est orienté axialement. Le disque 12 est lié en rotation à une roue (non représentée) qui est elle aussi d'axe "B".

Un étrier 14, qui est monté solidaire d'un organe de suspension de la roue, chevauche le disque 12 sur une partie de sa circonférence. L'étrier 14 porte des patins de friction 16a et 16b constitués chacun d'un support respectif 18a, 18b et d'une garniture de friction associée 20a, 20b qui, sous l'effet d'un dispositif 22 d'actionnement de l'étrier 14, sont destinés à être serrés axialement l'un en direction de l'autre contre deux faces annulaires opposées 24a, 24b du disque 12 pour ralentir la rotation relative du disque par rapport à l'étrier et éventuellement pour immobiliser le disque 12 en rotation autour de son axe "B".

Le conducteur du véhicule est susceptible de déterminer sélectivement une configuration de frein de service du dispositif ou une configuration de frein de stationnement du dispositif.

De manière non limitative de l'invention, l'étrier 14 qui a été représenté à la figure 1 est constitué d'un étrier dit flottant, c'est-à-dire qu'il est monté coulissant selon une direction axiale par rapport à la structure du véhicule. Ainsi, sous l'effet du dispositif d'actionnement 22, la garniture de friction 20a du premier patin de friction 16a qui est représenté à droite sur la figure 1, est appliquée contre la face annulaire 24a du disque 12.

Puis, en prenant appui sur le premier patin de friction 16a, l'étrier 14 coulisse en arrière, c'est à dire vers la droite de la figure 1, de façon à appliquer la garniture de friction 20b du second patin de friction 16b contre la face 24b du disque 12.

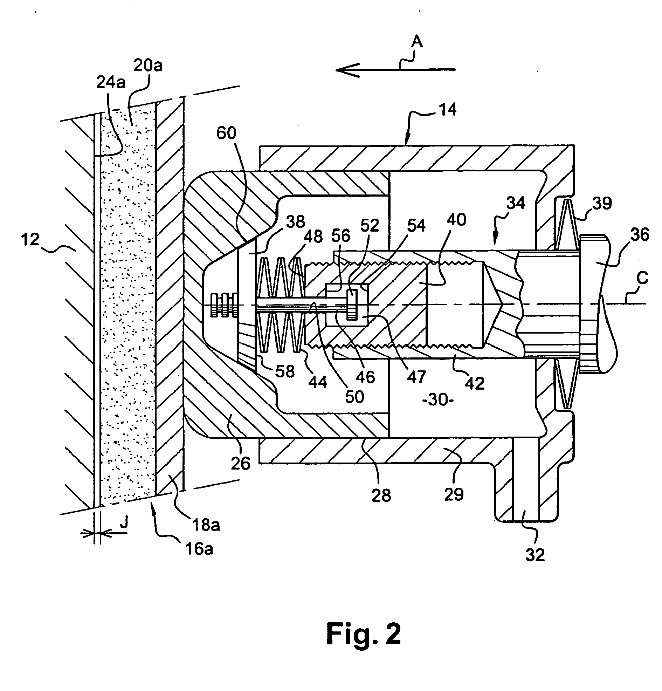

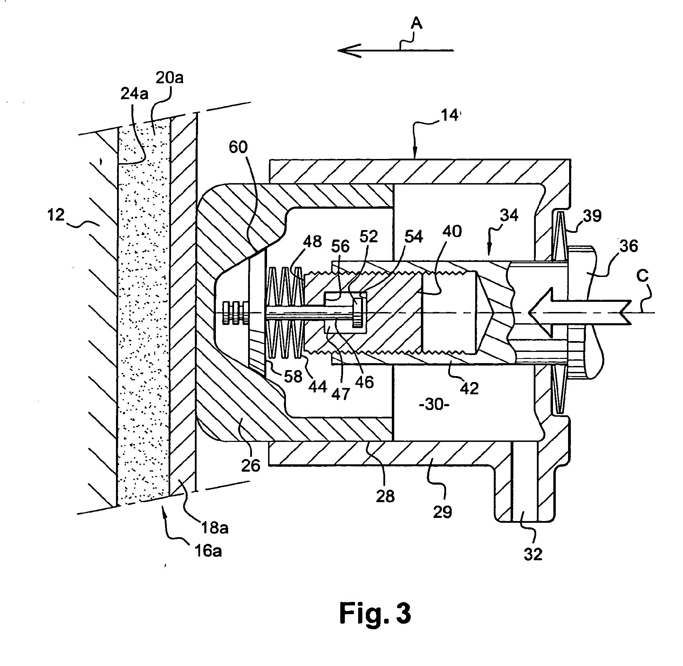

Dans l'exemple de réalisation qui a été représenté aux figures 2 et 3, le dispositif d'actionnement 22 qui provoque le serrage des patins de friction 16a et 16b comporte un piston 26 qui est monté coulissant axialement par rapport à un cylindre 28 formé dans le corps 29 de l'étrier 14. Une face 29 d'extrémité avant du piston 26, à gauche sur la figure 1, porte le patin de friction 16a.

Le piston 26 est monté coulissant entre une position arrière desserrée du patin 16a qui a été représentée à la figure 2, et une position avant de serrage du patin 16a contre le disque 12 qui a été représentée à la figure 3.

Selon une configuration de frein de service, le piston 26 est poussé hydrauliquement vers sa position de serrage tandis qu'en mode frein de stationnement, le piston 26 est poussé mécaniquement vers sa position de serrage.

Ainsi, le cylindre 28 comporte une chambre de pression 30 qui est remplie d'un fluide de freinage. La chambre de pression 30 communique par l'intermédiaire d'un orifice 32 avec un circuit de fluide de freinage (non représenté). La pression du fluide de freinage augmente sous l'effet de l'action d'une commande hydraulique qui est susceptible d'être actionnée par le conducteur pour ralentir le véhicule lorsque ce dernier roule.

Dans le mode de réalisation préféré de l'invention, Le fluide utilisé pour actionner le dispositif 10 est constitué d'un liquide de freinage, mais cette disposition n'est pas limitative de l'invention.

Le dispositif de freinage 10 est aussi conçu pour immobiliser le véhicule sous l'effet d'une seconde commande de frein de stationnement qui est susceptible d'être actionnée par le conducteur.

A cet effet, le dispositif d'actionnement 22 comporte une tige de poussée 34 d'axe "C" qui est montée coulissante axialement dans le cylindre 28 entre une première position arrière comme représenté à la figure 2, et une seconde position avant de serrage, comme représenté vers la gauche de la figure 3, dans laquelle elle provoque le déplacement du piston 26 vers sa position serrée.

Une première extrémité 36 de la tige 34, à droite sur les figures 2 et 3, est reliée à un organe de commande (non représenté) qui est susceptible d'être activé par le conducteur pour une utilisation selon une configuration de frein de stationnement. Cet organe de commande provoque le coulissement du piston 26 vers sa position avant de serrage. Il pourra s'agir de façon non limitative d'un système à rampe aussi appelé « ball in ramp ». Un tel dispositif est par exemple décrit dans le document FR-A-2.829.543.

Dans une position reculée desserrée du piston 26, la tête avant 38 de la tige 34 est située en regard d'une portée d'appui interne 60 du piston 26. A cet effet, la tête avant 38 est par exemple de forme tronconique et complémentaire de la portée d'appui interne 60 du piston 26.

En position de serrage du piston 26, la tête 38 de la tige 34 pousse le patin de friction 16 vers sa position serrée.

Des moyens de rappel élastiques 39, par exemple des rondelles de type "Belleville", sont agencés à l'extrémité 36 de la tige 34 de façon à rappeler cette dernière vers sa position desserrée.

De manière connue, la tige 34 comporte un dispositif de rattrapage de l'usure des garnitures de friction 20 pour maintenir constant le jeu "J" qui existe, en position desserrée, entre la garniture de friction 20a et la face 24a du disque 12. A cet effet, la tige 34 est divisée en une partie filetée cylindrique avant 40 qui est reçu dans une partie arrière 42 tubulaire taraudée. La partie arrière 42 est solidaire de l'extrémité arrière 36 de la tige 34.

La partie filetée cylindrique avant 40 est ainsi destinée à tourner automatiquement, grâce à des moyens non représentés, dans la partie arrière 42 taraudée afin d'allonger globalement la tige 34 en fonction de l'usure de la garniture de friction 20.

Selon les enseignements de l'invention, le dispositif de freinage 10 comporte des moyens élastiques 44 de stockage de l'énergie de serrage qui sont interposés entre l'organe de commande et le patin de friction 16a de façon à emmagasiner une partie de l'effort de pression appliqué au patin de friction 16a sous forme de déformation élastique lors du fonctionnement en mode frein de stationnement.

A cet effet, la tête 38 de la tige 34 est montée coulissante par rapport à la tige 34 selon l'axe "C" par l'intermédiaire d'une queue 46 qui s'étend axialement vers l'arrière à partir de la tête 38. La face d'extrémité avant 48 de la partie filetée cylindrique avant 40 de la tige 34 comporte un orifice de guidage 50 d'axe orienté axialement dans lequel la queue 46 est montée coulissante.

L'extrémité arrière de la queue porte une butée 52, réalisée par exemple sous la forme d'un bouchon à vis, qui est destinée à limiter dans les deux sens le coulissement de la tête 38 par la partie filetée cylindrique avant 40 en coopération avec une face arrière 54 et une face avant 56 d'une cavité 57 interne de la partie avant dans laquelle débouche l'orifice de guidage 50.

Des rondelles 44 de type "Belleville" sont empilées les unes sur les autres et enfilées autour de la queue 46 à l'extérieur de la partie 40 de façon à être intercalées entre une face d'extrémité avant 48 de la partie avant 40 et une face arrière 58 de la tête 38.

Les rondelles 44 de type "Belleville" constituent ici les moyens élastiques de stockage de l'énergie de serrage.

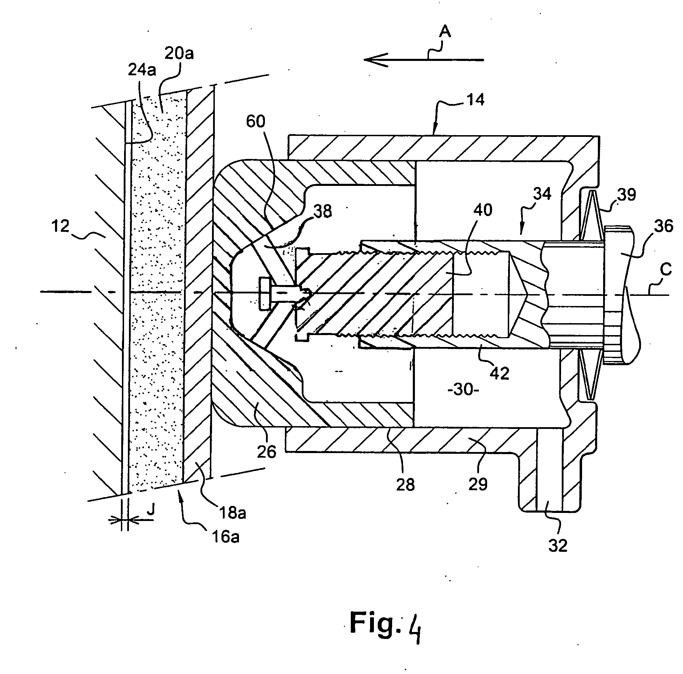

Selon d'autres variantes non représentées de l'invention, les rondelles 44 de type Belleville peuvent être remplacées ou complétées par un ressort à boudin d'axe "C", et/ou un élément constitué d'un matériau élastomère et déformable élastiquement selon la direction axiale "C". En variante, comme représentée à la figure 4, la tête 38 comporte une gorge circulaire d'axe C de manière à favoriser la déformation élastique lors du serrage du frein de parking.

La tête 38 joue ainsi le rôle de moyens élastiques 44 de stockage d'énergie de serrage.

Selon un autre mode de réalisation de l'invention (non représenté), les moyens élastiques 44 sont agencés entre la butée 52 portée par la queue 46 et le fond 54 de la cavité 47.

Lors du fonctionnement du dispositif de freinage 10 selon la configuration de frein de stationnement, le conducteur actionne l'organe de commande qui pousse la tige 34 axialement vers l'avant. La tête 38 de la tige 34 entre alors en contact avec la portée interne 60 du piston 26.

Le mouvement de la tête 38 vers l'avant est arrêté axialement par contact avec la portée interne 60 du piston 26. La tige 34 commence alors à coulisser vers l'avant par rapport à la tête 38 en comprimant les rondelles 44 de type Belleville.

Lorsque la face arrière 54 de la cavité 47 entre en contact avec la butée 52, la tête 38 est de nouveau poussée vers l'avant par la partie avant filetée 40. Le piston 26 est alors lui-même poussé vers sa position de serrage de la garniture de friction 20a contre le disque 12.

Le piston 26 arrive alors dans sa position de serrage dans laquelle il est maintenu par l'organe de commande.

Ainsi, en cas de rétraction des garnitures de friction 20a et 20b, l'énergie élastique emmagasinée dans les rondelles Belleville 44 permet de maintenir la garniture de friction 20a plaquée contre le disque 12.

Les moyens élastiques de stockage de l'énergie de serrage 44 peuvent être intercalés entre deux éléments quelconques de la chaîne d'éléments mécanique qui transmet la pression de poussée depuis l'organe de commande jusqu'à la garniture de friction 20a.

Ainsi, selon une variante non représentée, les moyens élastiques de stockage d'énergie de serrage peuvent être interposés axialement entre l'organe de commande et le piston 26.

Avantageusement, les moyens de stockage de l'énergie sont agencés uniquement dans la chaîne d'élément mécanique activée par l'organe de commande de sorte que lesdits moyens ne sont pas sollicités dans la configuration de frein de service et qu'ils ne modifient donc pas le fonctionnement du frein de service. En d'autres mots, il n'y a pas d'augmentation de l'absorption de liquide de frein de service lors d'un freinage par les moyens 44 de stockage de l'énergie de serrage.

Les moyens élastiques 44 sont précontraints. Avantageusement, la rigidité des moyens élastiques 44 de stockage d'énergie de serrage est sensiblement égale à la rigidité de l'étrier de frein. Par exemple, la rigidité des moyens élastiques est comprise entre 0,8 et 0,9 fois la rigidité de l'étrier.

L'organe de commande du frein de stationnement du dispositif de freinage est avantageusement activé par une pression hydraulique générée par une pompe hydraulique avec verrouillage mécanique en position de serrage des garnitures de friction.

L'invention propose donc un dispositif de freinage permettant d'assurer un serrage simple et efficace d'un frein de stationnement.

## Revendications

1. Dispositif de freinage (10) pour un véhicule automobile, du type qui comporte un organe mobile (12) lié à une roue du véhicule, et un organe statique (20a) du véhicule qui est commandé entre une position desserrée dans laquelle il n'est pas en contact avec l'organe mobile (12) et une position de serrage dans laquelle il est serré de façon continue contre l'organe mobile (12) afin d'immobiliser le véhicule en stationnement, l'organe statique (20a) étant rappelé élastiquement vers sa position desserrée, du type dans lequel les déplacements de l'organe statique (20a) sont commandés par un organe de commande qui, dans un état activé, pousse l'organe statique (20a) vers sa position de serrage,
**caractérisé en ce qu'**il comporte des moyens élastiques précontraints (44) de stockage d'énergie de serrage qui sont interposés entre l'organe de commande et l'organe statique (20a) de façon à être comprimés élastiquement entre l'organe de commande et l'organe statique (20a) lorsque l'organe de commande pousse l'organe statique (20a) vers sa position de serrage pour maintenir l'organe statique (20a) serré contre l'organe mobile (12) en cas de desserrage des organes statique (20a) et mobile (12) provoqué par le refroidissement de ceux-ci.

2. Dispositif (10) selon la revendication précédente, **caractérisé en ce que** l'organe mobile (12) est constitué d'un disque solidaire en rotation de la roue associée du véhicule, **en ce que** l'organe statique (20a) est constitué d'une garniture de friction qui est montée coulissante selon une direction axiale parallèle à l'axe (B) de la roue entre sa position de repos et sa position de serrage, et **en ce que** l'organe statique (20a) comporte un piston (26) coulissant axialement qui est interposé entre l'organe de commande et la garniture de friction (20a).

3. Dispositif selon la revendication précédente, **caractérisé en ce que** les moyens élastiques (44) de stockage d'énergie de serrage sont interposés axialement entre le piston (26) et la garniture de friction (20a).

4. Dispositif (10) selon la revendication 2, **caractérisé en ce que** les moyens (44) élastiques de stockage d'énergie de serrage sont interposés axialement entre l'organe de commande et le piston (26).

5. Dispositif selon l'une quelconque des revendications 2 à 4, **caractérisé en ce qu'**il comporte un frein de service qui est susceptible de commander le déplacement de la garniture de friction (20a) vers sa position de serrage indépendamment de l'organe de commande sans provoquer la compression des moyens (44) élastiques de stockage d'énergie de serrage.

6. Dispositif (10) selon l'une quelconque des revendications 2 à 5, **caractérisé en ce qu'**il comporte un dispositif de rattrapage d'usure (40, 42) de la garniture (20a) de friction qui est interposé entre l'organe de commande et la garniture (20a) de friction.

7. Dispositif (10) selon l'une quelconque des revendications précédentes, **caractérisé en ce que** les moyens (44) élastiques de stockage d'énergie de serrage comportent un empilement de rondelles de type Belleville.

8. Dispositif (10) selon l'une quelconque des revendications précédentes, **caractérisé en ce que** les moyens (44) élastiques de stockage d'énergie de serrage comportent un ressort déformable selon une direction (C) d'orientation axiale.

9. Dispositif (10) selon l'une quelconque des revendications précédentes, **caractérisé en ce que** les moyens (44) élastiques de stockage d'énergie de serrage comportent un élément qui est constitué d'un matériau élastomère déformable élastiquement.

## Claims

1. A brake device (10) for a motor vehicle, said brake device being of the type comprising a rotor member (12) constrained to rotate with a wheel of the vehicle, and a stator member (20a) of the vehicle that is caused to go between a released position in which it is not in contact with the rotor member (12) and an applied position in which it is applied continuously against the rotor member (12) in order to hold the vehicle stationary when it is parked, the stator member (20a) being urged resiliently towards its released position, said brake device also being of the type in which the stator member (20a) is caused to be displaced by a control member which, in an activated state, pushes the stator member (20a) towards its applied position;
said brake device being **characterized in that** it further comprises resilient means (44) for storing application energy that are interposed between the control member and the stator member (20a) so as to be compressed elastically between the control member and the stator member (20a) when the control member pushes the stator member (20a) towards its applied position in order to hold the stator member (20a) applied against the rotor member (12) in the event that the application between the stator member (20a) and the rotor member (12) loosens due to them cooling.

2. A device (10) according to the preceding claim, **characterized in that** the rotor member (12) is constituted by a disk that is constrained to rotate with the associated wheel of the vehicle, **in that** the stator member (20a) is constituted by a friction lining which is mounted to slide in an axial direction that is parallel to the axis (B) of the wheel between its rest position and its applied position, and **in that** the stator member (20a) is provided with a piston (26) that is mounted to slide axially and that is interposed between the control member and the friction lining (20a).

3. A device according to any preceding claim, **characterized in that** the resilient means (44) for storing application energy are interposed axially between the piston (26) and the friction lining (20a).

4. A device according to claim 2, **characterized in that** the resilient means (44) for storing application energy are interposed axially between the control member and the piston (26).

5. A device according to any one of claims 2 to 4, **characterized in that** it further comprises a service brake which is suitable for causing the friction lining (20a) to be displaced into its applied position independently of the control member without causing the resilient means (44) for storing application energy to be compressed.

6. A device (10) according to any one of claims 2 to 5, **characterized in that** it further comprises a wear take-up device (40, 42) for taking up wear in the friction lining (20a), which wear take-up device is interposed between the control member and the friction lining (20a).

7. A device (10) according to any preceding claim, **characterized in that** the resilient means (44) for storing application energy comprise a stack of Belleville-type spring washers.

8. A device (10) according to any preceding claim, **characterized in that** the resilient means (44) for storing application energy comprise a spring that is deformable along an axial direction (C).

9. A device (10) according to any preceding claim, **characterized in that** the resilient means (44) for storing application energy comprise an element that is made of an elastomer material that is elastically deformable.

## Patentansprüche

1. Bremsvorrichtung (10) für ein Kraftfahrzeug, der Art mit einem beweglichen Organ (12), das mit einem Fahrzeugrad verbunden ist, und einem statischen Organ (20a) des Fahrzeugs, das zwischen einer gelösten Stellung, in der es das bewegliche Organ (12) nicht berührt, und einer Klemmstellung gesteuert wird, in welcher es kontinuierlich am beweglichen Organ (12) geklemmt ist, um das Fahrzeug in der Parkstellung zu immobilisieren, wobei das statische Organ (20a) elastisch in seine gelöste Stellung zurückgestellt wird, der Art, bei der die Verlagerungen des statischen Organs (20a) von einem Steuerorgan gesteuert werden, das in einem aktivierten Zustand das statische Organ (20a) in seine Klemmstellung drückt,
**dadurch gekennzeichnet, dass** sie vorgespannte elastische Mittel (44) zum Speichern von Klemmenergie aufweist, die so zwischen dem Steuerorgan und dem statischen Organ (20a) angeordnet sind, dass sie zwischen dem Steuerorgan und dem statischen Organ (20a) elastisch zusammengedrückt werden, wenn das Steuerorgan das statische Organ (20a) in seine Klemmstellung drückt, um das statische Organ (20a) bei einem Lösen des statischen Organs (20a) und des beweglichen Organs (12), das durch deren Abkühlung hervorgerufen wird, am beweglichen Organ (12) geklemmt zu halten.

2. Vorrichtung (10) nach dem vorhergehenden Anspruch, **dadurch gekennzeichnet, dass** das bewegliche Organ (12) aus einer mit dem zugeordneten Fahrzeugrad drehfesten Scheibe gebildet ist, das statische Organ (20a) durch einen Reibbelag gebildet ist, der so angebracht ist, dass er zwischen seiner Ruhestellung und seiner Klemmstellung in einer axialen Richtung gleitet, die parallel zur Achse (B) des Rads ist, und das statische Organ (20a) einen axial gleitenden Kolben (26) aufweist, der zwischen dem Steuerorgan und dem Reibbelag (20a) angeordnet ist.

3. Vorrichtung nach dem vorhergehenden Anspruch, **dadurch gekennzeichnet, dass** die elastischen Mittel (44) zum Speichern von Klemmenergie axial zwischen dem Kolben (26) und dem Reibbelag (20a) angeordnet sind.

4. Vorrichtung (10) nach Anspruch 2, **dadurch gekennzeichnet, dass** die elastischen Mittel (44) zum Speichern von Klemmenergie axial zwischen dem Steuerorgan und dem Kolben (26) angeordnet sind.

5. Vorrichtung nach einem der Ansprüche 2 bis 4, **dadurch gekennzeichnet, dass** sie eine Betriebsbremse aufweist, die die Verlagerung des Reibbelags (20a) in seine Klemmstellung unabhängig von dem Steuerorgan steuern kann, ohne das Zusammendrücken der elastischen Mittel (44) zum Speichern von Klemmenergie zu verursachen.

6. Vorrichtung (10) nach einem der Ansprüche 2 bis 5, **dadurch gekennzeichnet, dass** sie eine Vorrichtung (40, 42) zur Kompensation des Verschleißes des Reibbelags (20a) aufweist, die zwischen dem Steuerorgan und dem Reibbelag (20a) angeordnet ist.

7. Vorrichtung (10) nach einem der vorhergehenden Ansprüche, **dadurch gekennzeichnet, dass** die elastischen Mittel (44) zum Speichern von Klemmenergie einen Stapel von Tellerfedern aufweisen.

8. Vorrichtung (10) nach einem der vorhergehenden Ansprüche, **dadurch gekennzeichnet, dass** die elastischen Mittel (44) zum Speichern von Klemmenergie eine Feder aufweisen, die in eine Richtung (C) mit axialer Ausrichtung verformbar ist.

9. Vorrichtung (10) nach einem der vorhergehenden Ansprüche, **dadurch gekennzeichnet, dass** die elastischen Mittel (44) zum Speichern von Klemmenergie ein Element aufweisen, das aus elastisch verformbarem Elastomermaterial besteht.
